# FASCICULE DE BREVET EUROPEEN

(11) **EP 1 526 253 B1**
(45) Date de publication et mention de la délivrance du brevet: **09.05.2007**
(21) Numéro de dépôt: 04300697.2
(22) Date de dépôt: 20.10.2004
(51) Int. Cl.: F01D 11/04

(54) **Dispositif de joint à labyrinthe pour moteur à turbine à gaz**
Labyrinthdichtung einer Turbomaschine
Labyrinth seal for a turbo machine

(30) Priorité: 21.10.2003 FR 0312310
(43) Date de publication de la demande: 27.04.2005
(73) Titulaire: SNECMA, 75015 Paris (FR)
(72) Inventeur: Coulon, Sylvie, 77590 Bois le Rois (FR); Roussin, Delphine, 92160, Antony (FR); Bes, Martine, 91390 Morsang sur Orge (FR)
(74) Mandataire: David, Daniel

(56) Documents cités:
- EP-A- 0 616 113
- US-A- 4 320 903
- US-A- 4 397 471
- US-A- 4 425 079
- US-A- 4 554 789

## Description

La présente invention se rapporte au domaine des moteurs à turbine à gaz et vise un dispositif d'étanchéité comportant un joint à labyrinthe pour une partie tournante du moteur située au niveau de la chambre de combustion.

L'invention s'applique en particulier aux moteurs dont un joint à labyrinthe assure l'étanchéité entre le flux gazeux en sortie du compresseur haute pression et l'espace sous la chambre de combustion qui est délimité par le carter diffuseur immédiatement en aval du compresseur haute pression et l'arbre du moteur.

Un joint à labyrinthe est constitué d'une pièce cylindrique solidaire du rotor et coaxiale à l'axe de rotation du moteur. Sur cette pièce sont montés une pluralité d'éléments, appelés léchettes, en forme de lames circonférentielles perpendiculaires à l'axe du moteur, avec un bord libre effilé et disposées parallèlement entre elles. Les lames coopèrent avec une pièce cylindrique solidaire du stator. Chaque lame est maintenue à faible distance de la pièce cylindrique statorique et forme un étranglement pour tout écoulement de fluide résultant d'un écart de pression de part et d'autre du joint. Le jeu existant entre les deux pièces détermine le débit de fuite à travers le joint à labyrinthe. Pour éviter que les lames rotatives ne soient endommagées en cas de contact, l'élément cylindrique statorique est revêtu d'une pièce d'usure en un matériau qui est susceptible de se déformer préférentiellement par rapport au matériau constituant les lames. Il s'agit par exemple d'un matériau en nid d'abeille ou de type connu dans le domaine par le terme abradable.

Dans le cas du joint à labyrinthe cité plus haut, on met à profit ce moyen pour contrôler le débit d'air issu du compresseur qui le traverse et qui est dirigé vers les moyens de ventilation du disque de turbine immédiatement en aval de la chambre de combustion. Cet air provient de l'espace existant entre le disque aubagé du rotor du compresseur haute pression et le diffuseur. La pression régnant dans l'espace situé immédiatement en aval de ce prélèvement est déterminée par l'étranglement formé par le labyrinthe. On constate que la pression est soumise à des fluctuations dommageables pour le rotor si le jeu subit des variations causées par une dilatation non contrôlée des lames du joint. Il existe donc un besoin de maîtriser le jeu radial du labyrinthe.

Pendant certaines phases de fonctionnement du moteur comme l'accélération par exemple, l'air issu du compresseur peut subir une élévation de température importante en un temps très court. La partie statorique du joint se trouve soumise à une température élevée tandis que les éléments rotoriques du joint situés plus profondément dans le moteur sont moins exposés. Ainsi dans la mesure où les deux parties du joint ne se dilatent pas de la même façon, il s'ensuit une tendance à une ouverture importante du jeu. On cherche donc à piloter le jeu radial du labyrinthe.

Dans le brevet US 4 554 789, on décrit un moyen pour minimiser la dilatation thermique différentielle entre les deux organes du joint et permettre ainsi le maintien d'un jeu réduit pendant toutes les phases de fonctionnement du moteur. De l'air est prélevé en aval du diffuseur du compresseur, et est dirigé par des orifices ménagés dans le carter diffuseur interne de la chambre de combustion dans une cavité annulaire entourant l'élément statorique du joint. Les orifices sont disposés de manière à créer des jets d'air de refroidissement par impact sur la paroi extérieure des pièces d'usure du joint. Pendant les phases transitoires de fonctionnement, cet air qui est alors à une température plus élevée chauffe cette paroi. Ainsi cet air remplit-il une fonction de conditionnement et assure-t-il un pilotage de la dilatation du jeu. L'air est ensuite guidé depuis cette cavité par des orifices calibrés directement dans l'espace entre le stator et les lames du rotor où il assure le refroidissement de ces dernières.

On observe que la virole supportant les pièces d'usure comporte une bride aval par laquelle elle est fixée à une bride solidaire de la paroi du carter diffuseur dans la chambre de combustion.

On connaît également le brevet US 5 333 993 portant sur un joint à labyrinthe disposé entre le compresseur haute pression et la turbine haute pression. Un espace d'air non ventilé est ménagé autour de l'organe statorique du joint supportant les éléments en nid d'abeille. Des anneaux sont placés dans cet espace autour du dit support. Ils sont réalisés en un matériau présentant un coefficient de dilation inférieur à celui du segment d'étanchéité. On assure ainsi un jeu minimal entre les lames et le matériau en nid d'abeille pendant les phases d'accélération du moteur.

La présente invention vise à une solution avec laquelle on maîtrise la réponse thermique du joint pendant les phases transitoires de fonctionnement du moteur pour augmenter la durée de vie du joint.

L'invention a pour objet aussi d'assurer une plus grande stabilité de l'écoulement de l'air à travers le joint de manière à limiter les fluctuations de pression au prélèvement du compresseur.

L'invention parvient à réaliser ces objectifs avec un dispositif de joint d'étanchéité à labyrinthe pour moteur à turbine à gaz comportant d'amont en aval un compresseur haute pression, un diffuseur et un élément de paroi fixe formant au moins une partie de l'enveloppe interne de la chambre de combustion, ledit joint comprenant une pièce statorique montée sur l'élément de paroi par un moyen de fixation à brides et supportant une pièce d'usure annulaire, ladite pièce d'usure coopérant avec un élément de rotor, pourvu de lames circonférentielles et solidaire du rotor du compresseur, pour former l'étanchéité à labyrinthe, caractérisé par le fait qu'au moins une des brides du dit moyen de fixation présente une masse suffisante pour harmoniser la vitesse de dilatation de la pièce statorique par rapport à la vitesse de dilatation de l'élément de rotor pendant les phases d'accélération du moteur.

L'invention permet ainsi par un moyen simple de résoudre le problème du contrôle du jeu dans le joint à labyrinthe.

Conformément à un mode de réalisation préféré l'élément de paroi comporte des orifices de ventilation disposés à proximité immédiate du moyen de fixation. En prélevant l'air immédiatement en aval du dernier étage du compresseur et en disposant les orifices calibrés de manière judicieuse, on contrôle aisément la dilatation de l'élément de stator pendant les phases transitoires de fonctionnement du moteur.

Avantageusement la pièce statorique du joint comporte une première partie enveloppant la pièce d'usure prolongée en aval par une deuxième partie annulaire solidaire d'une bride de fixation radiale sur sa face extérieure, ladite bride de fixation externe coopérant avec une bride de fixation intérieure solidaire dudit élément de paroi pour former le moyen de fixation.

La deuxième partie de la pièce statorique annulaire, le moyen de fixation et l'élément de paroi définissent entre eux une première cavité. En particulier, la première cavité est alimentée par les trous de ventilation.

Conformément à une autre caractéristique, la première partie de la pièce statorique annulaire forme avec cet élément de paroi un passage ouvert vers l'amont, l'air venant des trous de ventilation étant guidé dans la première cavité puis dans ledit passage avant d'être évacué en amont du joint à labyrinthe. Par ce dispositif, on assure un balayage continu de la première partie formant support de la pièce d'usure, contribuant à stabiliser cette pièce par rapport aux variations de température résultant des échauffements dus à des frottement éventuels.

Conformément à une autre caractéristique, la deuxième partie annulaire est prolongée en aval de la bride par une troisième partie, les dites seconde et troisième parties formant un conduit de guidage d'air de fuite du compresseur distant de la paroi de l'enveloppe de la chambre de combustion. En particulier, la troisième partie forme une deuxième cavité avec l'élément de paroi de l'enveloppe de la chambre de combustion.

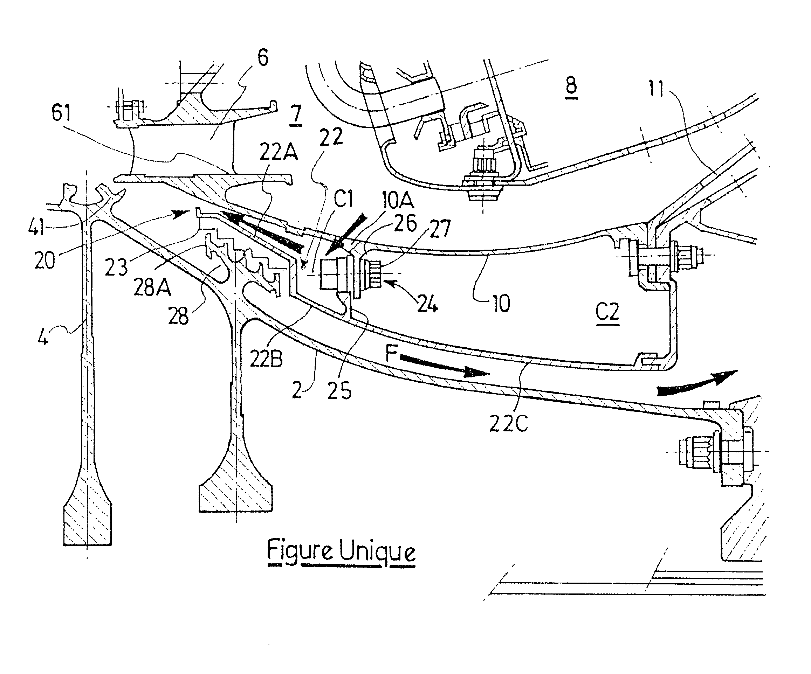

L'invention sera mieux comprise et d'autres avantages ressortiront de la lecture de la description qui suit d'un mode de réalisation préféré de l'invention accompagnée de dessins sur lesquel
La figure unique représente en coupe axiale, une vue partielle d'un moteur à turbine à gaz comportant un dispositif d'étanchéité à joint à labyrinthe conforme à l'invention.

Le moteur représenté sur la figure unique comprend de gauche à droite, c'est à dire d'amont en aval par rapport à l'écoulement des flux gazeux, un rotor 2 avec un disque de compresseur 4 sur lequel les aubes ont été omises. Il s'agit ici du compresseur haute pression qui communique avec un diffuseur constitué d'aubes fixes 6. A partir de cet étage, l'air est introduit dans l'enceinte 7 comprenant la chambre de combustion 8. On ne voit qu'une partie de l'extrémité amont de la chambre 8. L'enceinte 7 de la chambre comprend une paroi interne 10 qui vient se raccorder à l'étage 6 sous les plate-formes 61. Comme on le voit, celles-ci sont alors en corniche à l'intérieur de l'enceinte 7. La paroi 10 est solidaire d'une paroi aval 11 que l'on ne voit qu'en partie et qui se prolonge jusqu'à l'entrée de l'étage de la turbine haute pression, non représentée. La turbine est montée sur le même arbre de rotor 2 qu'elle entraîne. Elle est elle-même entraînée par les gaz issus de la chambre de combustion

Un joint d'étanchéité 41 est ménagé près de la veine d'air entre le disque 4 et les aubes 6 du diffuseur. L'air de fuite F est guidé vers l'aval où il est utilisé notamment au refroidissement de parties liées à la turbine. Le débit de ce flux d'air est limité grâce à l'interposition d'un joint 20 à labyrinthe dans l'espace sous la chambre de combustion.

Ce joint 20 comprend un élément de rotor 28 annulaire pourvu sur sa face externe d'une pluralité de lames radiales 28A, ici cinq, circonférentielles et parallèles entre elles. Il pourrait n'y avoir qu'une seule lame. Le joint est composé aussi d'un élément de stator 22. Celui-ci comprend une première partie 22A qui supporte une pièce d'usure 23. La pièce d'usure, qui peut être en une seule ou plusieurs parties, enveloppe les lames 28A à une distance déterminée qui constitue le jeu du joint. En fonctionnement, en raison de la différence de pression entre les deux côtés du joint, l'air s'écoule de la zone haute pression, en amont, vers la zone de pression plus faible, vers l'aval. Ce débit de fuite est fonction du jeu. La pièce d'usure 23 est réalisée en un matériau dit abradable dont la résistance mécanique est suffisamment faible pour céder ou s'éroder lorsque les lames viennent à frotter contre elle accidentellement.

L'élément de stator comprend une deuxième partie 22B et une troisième partie 22C. Elles sont annulaires et dans le prolongement l'une de l'autre. Une bride circonférentielle radiale, 25, est soudée, ou fixée de toute autre manière, sur la face externe de l'élément 22. La bride 25 est fixée par boulons 27 à une bride circonférentielle radiale 26 solidaire de la face interne de l'élément de paroi 10. Ensemble, les brides et les boulons forment le moyen de fixation 24 de l'élément de stator 22 à l'élément de paroi 10. Avantageusement, les éléments 22B et 22C sont conformés de manière à délimiter un canal annulaire d'ouverture déterminée avec la paroi du rotor 2. Ce carénage assure le guidage de l'air de fuite venant du compresseur circulant vers l'aval, et un écoulement aussi peu perturbé que possible. Il réduit les échauffements de l'air.

Comme on le voit sur la figure, les éléments 22B, 10 et 24 délimitent entre eux une première cavité C1 annulaire. La hauteur de cette cavité C1 entre les parois 22B et 10 est déterminée par la hauteur du moyen de fixation 24. En aval du moyen 24, les éléments de parois 22C et 10 définissent entre eux une deuxième cavité C2. Ce carénage intérieur offre l'avantage supplémentaire d'isoler l'air circulant à proximité du rotor.

Des orifices ou trous de ventilation calibrés 10A sont percés dans la paroi 10, immédiatement en amont de la bride 26. Ils sont orientés de façon à alimenter la cavité C1. Ces trous 10A sont avantageusement inclinés de manière à imprimer une pré-rotation initiale du fluide. Ils sont placés au plus près de la bride pour refroidir celle-ci qui pilote le déplacement du labyrinthe pour une régulation du jeu. L'air ayant circulé dans la cavité C1 est dirigé vers le passage formé entre les éléments de paroi 10 et l'élément de stator 22A. Ainsi la cavité C1 assure la ventilation au dessus du support abradable pour refroidir le support. Le basculement de celui -ci est limité pour un jeu quasi-constant sur les cinq lames ou léchettes. L'échauffement du joint à labyrinthe est évacué lors des contacts entre les léchettes et l'abradable.

Le fonctionnement du dispositif de joint d'étanchéité à labyrinthe de l'invention est le suivant.

Pendant les phases d'accélération du moteur, l'air issu du compresseur est à une température élevée. En choisissant une bride 25 ou 26 massive, présentant une inertie thermique importante, le temps de réponse de la dilatation de l'élément de stator 22A est augmenté. Il s'ensuit que le jeu entre le stator 22A et l'élément 23 a tendance à moins s'ouvrir conduisant à un débit de fuite plus faible et un rendement amélioré.

On contrôle le débit de l'air par une disposition et un calibrage des orifices de ventilation 10A de manière que la dilatation du stator accompagne celle du rotor. En particulier la section de passage de la cavité C1 est supérieure ou au moins égale à la section des trous 10A afin de ne pas diminuer la perméabilité du système. Ce sont les trous 10A qui calibrent le débit de refroidissement du labyrinthe. La présence de la première cavité C1 permet par ailleurs une meilleure homogénéisation de la température, le long des pièces 22B et 24.

En régime permanent,
le refroidissement de l'élément de stator est assuré par le balayage de la zone annulaire entourant l'élément de stator 22A, sous la paroi 10.

## Revendications

1. Dispositif de jointe d'étanchéité à labyrinthe pour moteur à turbine à gaz comportant d'amont en aval un compresseur haute pression avec un rotor (2), un diffuseur (6) et un élément (10) de paroi fixe formant au moins une partie de l'enveloppe interne de la chambre de combustion (8), ledit joint (20) comprenant une pièce statorique (22) montée sur l'élément de paroi par un moyen de fixation (24) à brides (25 et 26) et supportant une pièce d'usure annulaire (23), ladite pièce d'usure coopérant avec un élément de rotor (28), pourvu d'au moins une lame circonférentielle (28A) et solidaire du rotor (2) du compresseur, pour former l'étanchéité à labyrinthe, **caractérisé par le fait qu'**au moins une des brides (25, 26) du dit moyen de fixation (24) présente une masse suffisante pour harmoniser la vitesse de dilatation de la pièce statorique (22) par rapport à la vitesse de dilatation de l'élément de rotor (28) pendant les accélérations du moteur.

2. Dispositif selon la revendication précédente dont l'élément de paroi (10) comporte des orifices (10A) de ventilation disposés à proximité immédiate du moyen de fixation (24).

3. Dispositif selon la revendication 1 ou 2 dont la pièce statorique (22) du joint comporte une première partie (22A) enveloppant la pièce d'usure (23) prolongée en aval par une deuxième partie annulaire (22B) solidaire d'une bride (25) de fixation radiale sur sa face extérieure, ladite bride de fixation externe (25) coopérant avec une bride de fixation intérieure (26) solidaire dudit élément de paroi (10) pour former le moyen de fixation (24), la deuxième partie (22B), le moyen de fixation (24) et l'élément de paroi (10) définissant une première cavité (C1).

4. Dispositif selon la revendication précédente dont la première cavité (C1) est alimentée par les trous de ventilation (10A).

5. Dispositif selon la revendication précédente dont la deuxième partie annulaire (22B) est prolongée en aval de la bride (25) par une troisième partie (22C), les dites deuxième (22B) et troisième (22C) parties formant un conduit de guidage d'air de fuite du compresseur distant de la paroi de l'enveloppe de la chambre de combustion.

6. Dispositif selon la revendication précédente dont la troisième partie (22C) forme une deuxième cavité (C2) avec l'élément de paroi (10) de l'enveloppe de la chambre de combustion.

7. Dispositif selon la revendication précédente dont la première partie (22A) forme avec l'élément de paroi (10) un passage ouvert vers l'amont, l'air venant des trous de ventilation (10A) étant guidé dans la première cavité (C1) puis dans ledit passage avant d'être évacué en amont du joint à labyrinthe.

## Claims

1. Labyrinth sealing device for gas turbine engine including, from the upstream to the downstream end, a high-pressure compressor with a rotor (2), a diffuser (6) and a fixed wall element (10) forming at least one part of the inside envelope of combustion chamber (8) said seal (20) containing a stator part (22) mounted on the wall element by an attaching device (24) with flanges (25 and 26) and supporting an annular wearing device (23) said wearing part working together with a rotor element (28), provided with at least one circumferential tooth (28A) and integral with rotor (2) of the compressor to form the labyrinth seal **characterized in that** at least one of flanges (25, 26) of said attaching device (24) is heavy enough to harmonize the dilation rate of the stator part (22) with respect to the dilatation rate of rotor element (28) during engine accelerations.

2. A device according to the previous claim whose wall section (10) includes orifices for ventilation (10A) located immediately next to attaching resource (24).

3. A device according to claim 1 or 2 in which stator part (22) of the seal includes a first part (22A) containing the wearing part (23) extending on the downstream side into a second annular part (22B) integral with a radial attaching flange (25) on the outside while said attaching flange (25) works together with an internal attaching flange (26) integral with said wall element (10) to form an attaching means (24) integral with said wall element (24) the second part (22B), the means of attachment (24) and wall element (10), defining an initial cavity (C1).

4. A device according to the above claim whose first cavity (C1) is fed through the ventilation holes (10A).

5. A device according to the above claim whose second annular part (22B) extends downstream of flange (25) into a third part (22C) with said second (22B) and third (22C) parts forming an air guidance channel at some distance from the combustion chamber envelope.

6. A device according to the above claim whose third part (22C) forms a second cavity (C2) with wall element (10) of the combustion chamber envelope.

7. A device according to the previous claim whose first part (22A) forms with wall element (10) an open passage to the upstream end with the air coming from the ventilation holes (10A) being guided into the first cavity (C1) then into said passage before being evacuated upstream of the labyrinth seal.

## Patentansprüche

1. Labyrinthdichtung für einen Gasturbinenmotor, der von vom nach hinten einen Hochdruckverdichter mit einem Rotor (2), einen Diffusor (6) und ein feststehendes Wandelement (10) aufweist, welches mindestens einen Teil der Innenhülle der Brennkammer (8) bildet, wobei diese Dichtung (20) ein Statorteil (22) umfasst, das an dem Wandelement durch ein Befestigungsmittel (24) mit Flanschen (25 und 26) angebracht ist und ein ringförmiges Verschleißteil (23) trägt, wobei dieses Verschleißteil mit einem Rotorelement (28) zusammenwirkt, das mit mindestens einem Umfangsplättchen (28A) versehen ist und mit dem Rotor (2) des Verdichters fest verbunden ist, um die Dichtigkeit des Labyrinths herzustellen,
**dadurch gekennzeichnet,**
**dass** zumindest einer der Flansche (25, 26) dieses Befestigungsmittels (24) eine ausreichende Masse aufweist, um während der Beschleunigungen des Motors die Dehnungsgeschwindigkeit des Statorteils (22) und die Dehnungsgeschwindigkeit des Rotorelements (28) einander anzugleichen.

2. Labyrinthdichtung nach dem vorherigen Anspruch, bei der das Wandelement (10) Lüftungsöffnungen (10A) enthält, die in unmittelbarer Nähe des Befestigungsmittels (24) angeordnet sind.

3. Labyrinthdichtung nach Anspruch 1 oder 2, bei der das Statorteil (22) der Dichtung einen ersten Teil (22A) aufweist, der das Verschleißteil (23) ummantelt und nach hinten von einem zweiten, ringförmigen Teil (22B) fortgesetzt wird, das fest mit einem radialen Befestigungsflansch (25) an seiner Außenseite verbunden ist, wobei dieser äußere Befestigungsflansch (25) mit einem inneren Befestigungsflansch (26) zusammenwirkt, der fest mit dem genannten Wandelement (10) verbunden ist, um das Befestigungsmittel (24) zu bilden, wobei der zweite Teil (22B), das Befestigungsmittel (24) und das Wandelement (10) einen ersten Hohlraum (C1) bilden.

4. Labyrinthdichtung nach dem vorherigen Anspruch, bei der der erste Hohlraum (C1) durch die Lüftungsöffnungen (10A) versorgt wird.

5. Labyrinthdichtung nach dem vorherigen Anspruch, bei der der zweite, ringförmige Teil (22B) hinter dem Flansch (25) von einem dritten Teil (22C) fortgesetzt wird, wobei dieser zweite Teil (22B) und dieser dritte Teil (22C) eine Führungsleitung für Leckluft des Verdichters bilden, die von der Wand des Mantels der Brennkammer entfernt ist.

6. Labyrinthdichtung nach dem vorherigen Anspruch, bei der der dritte Teil (22C) mit dem Wandelement (10) des Mantels der Brennkammer einen zweiten Hohlraum (C2) bildet.

7. Labyrinthdichtung nach dem vorherigen Anspruch, bei der der erste Teil (22A) mit dem Wandelement (10) einen nach vorne offenen Durchgang bildet, wobei die von den Lüftungsöffnungen (10A) kommende Luft in den ersten Hohlraum (C1) und dann in diesen Durchgang geführt wird, bevor sie vor der Labyrinthdichtung abgelassen wird.
